# FASCICULE DE BREVET EUROPEEN

(11) **EP 1 730 580 B1**
(45) Date de publication et mention de la délivrance du brevet: **23.07.2008**
(21) Numéro de dépôt: 05744620.5
(22) Date de dépôt: 29.03.2005
(51) Int. Cl.: G02C 7/12

(54) **ELEMENT DE VISION TRANSPARENT ET POLARISANT AYANT DES ZONES ASSOCIEES A DES FILTRES DE POLARISATION ORIENTES RESPECTIVEMENT VERTICALEMENT ET HORIZONTALEMENT**
TRANSPARENTES UND POLARISIERENDES SICHTUNGSELEMENT MIT BEREICHEN, DIE MIT POLARISATIONSFILTERN ASSOZIIERT SIND, DIE VERTIKAL BZW. HORIZONTAL ORIENTIERT SIND
TRANSPARENT AND POLARIZING VISION ELEMENT HAVING AREAS WHICH ARE ASSOCIATED WITH POLARIZATION FILTERS THAT ARE RESPECTIVELY VERTICALLY AND HORIZONTALLY ORIENTED

(30) Priorité: 02.04.2004 FR 0403509
(43) Date de publication de la demande: 13.12.2006
(73) Titulaire: ESSILOR INTERNATIONAL (COMPAGNIE GENERALE D'OPTIQUE), 94220 Charenton le Pont (FR)
(72) Inventeur: BEGON, Cédric c/o Essilor International, F-94220 Charenton-le-Pont (FR); BITEAU, John c/o Essilor International, F-94220 Charenton-le-Pont (FR); BIVER, Claudine c/o Essilor International, F-94220 Charenton-le-Pont (FR); BOSMANS, Richard c/o Essilor International, F-94220 Charenton-le-Pont (FR); CANO, Jean-Paul c/o Essilor International, F-94220 Charenton-le-Pont (FR); GIRAUDET, Guillaume c/o Essilor International, F-94220 Charenton-le-Pont (FR); MUISENER, Richard c/o Essilor of America, St-Petersburg, FL 33709 (US)
(74) Mandataire: Boire, Philippe Maxime Charles
(86) Numéro de dépôt international: PCT/FR2005/000749
(87) Numéro de publication internationale: WO 2005/098520

(56) Documents cités:
- DE-A1- 10 237 684
- FR-A- 2 736 444
- US-A- 2 334 446
- US-A- 3 211 047
- US-A1- 2004 046 927

## Description

La présente invention concerne un élément de vision transparent et polarisant ayant une zone associée à un filtre de polarisation orienté verticalement, une zone associée à un filtre de polarisation orienté horizontalement, et une zone non polarisée.

US 6,250,759 décrit des verres de lunettes adaptés pour la pratique d'activités de loisir, telles que le golf, la chasse ou la pêche. De tels verres sont divisés en plusieurs zones, dont les caractéristiques de transmission lumineuse sont adaptées en fonction des objets ou du paysage regardé lors de la pratique de ces activités. En particulier, des zones distinctes du verre peuvent présenter des caractéristiques différentes de filtrage de la lumière en fonction d'une polarisation de celle-ci.

US 3,211,047 décrit des verres de lunettes adaptés pour la protection de la fonction visuelle d'un conducteur de véhicule automobile contre les éblouissements liés aux réverbérations de la lumière sur des surfaces réfléchissantes. De tels verres sont divisés en plusieurs zones, dont une première zone associée à un filtre de polarisation est orienté verticalement par rapport à la position d'usage de l'élément, ladite première zone étant située dans une partie latérale de l'élément par rapport à sa position d'usage, et une deuxième zone est associée à un filtre de polarisation orienté horizontalement.

US 2,334,446 décrit des verres de lunettes adaptés pour la protection de la fonction visuelle d'un conducteur de véhicule automobile contre les éblouissements liés aux réverbérations de la lumière sur des surfaces réfléchissantes. De tels verres sont divisés en plusieurs zones, dont une première zone associée à un filtre de polarisation est orienté verticalement par rapport à la position d'usage de l'élément, une deuxième zone est associée à un filtre de polarisation orienté à 45°, et une troisième zone non polarisée est positionnée dans la partie inférieure de l'élément par rapport à sa position d'usage.

La lumière naturelle n'est pas polarisée ; les ondes électromagnétiques dont elle est composée vibrent dans toutes les directions. David Brewster (à partir de 1811) a montré que pour une certaine incidence, une lumière monochromatique réfléchie sur une surface transparente est polarisée à 100%. La loi de Brewster stipule que la direction de polarisation de l'onde réfléchie est parallèle au plan de réflexion. Ainsi la réverbération d'une lumière sur un plan horizontale sera-t-elle polarisée horizontalement. Les verres ophtalmiques polarisants ont été conçus en réponse à ces propriétés physiques de la lumière réfléchie. Un verre dont la direction de polarisation est horizontale filtre de façon sélective les rayons lumineux issus de la réflexion sur des surfaces transparentes horizontales. Ces verres sont particulièrement efficaces pour éliminer les réverbérations gênantes sur les plans d'eau, sur les revêtements de sol, sur le sable ou la neige. Néanmoins, les surfaces réfléchissantes horizontales ne constituent pas la majorité des sources potentielles d'éblouissement. Ainsi la lumière se réfléchissant sur les vitres d'un immeuble ou d'une voiture sera-t-elle, à l'inverse du cas décrit précédemment, polarisée verticalement. Les verres polarisants actuellement disponibles sur le marché se révèlent alors totalement inefficaces pour protéger l'observateur contre ces agressions lumineuses.

Certaines caractéristiques du paysage présent dans le champ de vision d'une personne sont particulières en milieu urbain. Le milieu urbain présente notamment de nombreuses surfaces verticales réfléchissantes, telles que, par exemple, des vitrages d'immeubles. Ces parois verticales génèrent des reflets dont l'intensité peut être suffisante pour provoquer un éblouissement. Un tel éblouissement est source d'inconfort, mais il peut être aussi source de danger dans certaines circonstances. Ceci est le cas pour un conducteur de véhicule automobile ou de motocycles, par exemple.

Un but de la présente invention est d'apporter une protection de la fonction visuelle contre les éblouissements liés aux réverbérations de la lumière sur des surfaces réfléchissantes, grâce notamment à une limitation de l'inconfort lié aux différentes sources éblouissantes de réverbérations.

Pour cela, la présente invention propose un élément de vision transparent et polarisant selon la revendication 1.

On entend par élément de vision transparent et polarisant (aussi dénommé élément) les verres oculaires. Par verres on comprend toutes lentilles de matière minérale et organique, de composition et sous formes variables s'adaptant à une monture de lunettes pour protéger et/ou corriger la vue, ces verres étant choisis parmi les verres afocaux, unifocaux, bifocaux, trifocaux et progressifs.

On entend par position d'usage de l'élément de vision transparent et polarisant la position de cet élément lorsqu'il est adapté dans une monture devant les yeux d'une personne conformément à l'utilisation normale de l'élément, pour une position verticale de la tête de la personne. Par verticale, il est fait référence à la verticale gravitationnelle. Par opposition, par horizontale, il est fait référence à une direction déviant d'un angle de 90° par rapport à la verticale gravitationnelle.

Le centre optique d'un verre, considéré dans la suite, est souvent confondu avec le centre géométrique du verre avant usinage. Plus généralement, le centre optique peut être défini de l'une des façons suivantes :
- le point situé sur la lentille au milieu de deux gravures ;
- le point représentant le prisme prescrit au porteur en vision de loin ;
- le point matérialisé sur la lentille, avant montage dans la monture, par une croix tracée sur la lentille ;
- ou le point par lequel passe l'axe optique de la lentille, l'axe optique représentant la ligne joignant les centres des deux surfaces composant la lentille.

On entend par orientation d'un filtre de polarisation l'orientation du champ électrique d'une lumière incidente pour laquelle l'intensité de la lumière transmise par ce filtre est minimale ou nulle. Dans le cadre de l'invention, on ne considère que des polarisations linéaires de la lumière, ou des composantes linéaires de polarisation lumineuse. La lumière naturelle n'est pas polarisée. Elle n'a pas de directions privilégiées. En revanche, une lumière réfléchie sur une surface transparente est polarisée. La direction de polarisation de l'onde réfléchie est parallèle au plan de réflexion. Grâce à la présence d'un filtre de polarisation orienté verticalement dans au moins une zone de l'élément, la lumière provenant de reflets sur des parois verticales est atténuée par l'observateur regardant au travers de ladite zone. Un confort visuel amélioré en résulte en milieu urbain.

Selon l'invention, la zone associée au filtre de polarisation orienté verticalement est située dans une partie latérale de l'élément par rapport à sa position d'usage. L'élément transparent de vision est alors particulièrement adapté à la situation courante d'éblouissement en milieu urbain, selon laquelle le reflet sur une paroi verticale est situé dans une partie latérale du champ de vision. Une telle situation correspond au cas d'un promeneur ou d'un automobiliste regardant dans le sens d'une rue bordée de vitrines provoquant des reflets. Elle correspond également au cas d'un conducteur de véhicule subissant un éblouissement dû au reflet de la lumière sur des véhicules présents à sa droite et/ou à sa gauche. En particulier, la zone associée au filtre de polarisation orienté verticalement peut être adjacente à un bord latéral de l'élément.

Dans le cadre de l'invention au moins une des zones de l'élément, autre que celle associée à un filtre de polarisation orienté verticalement, est associée à un filtre de polarisation orienté selon une direction horizontale. Selon l'invention, l'élément de vision transparent et polarisant en plus comporte une zone non polarisée

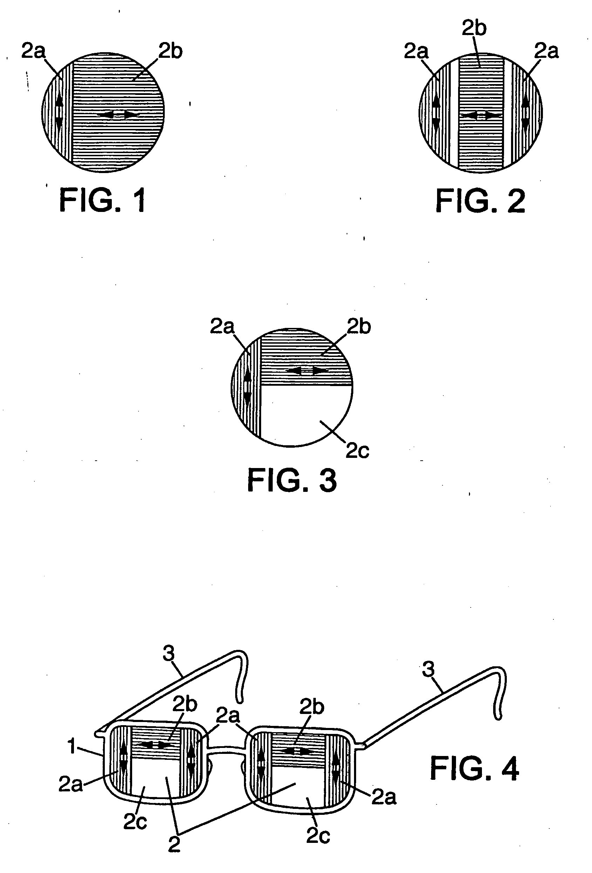

Ainsi dans le cas d'un élément présentant deux zones qui n'est pas dans le cadre de l'invention, la première zone (2a) est associée à un filtre de polarisation orienté verticalement et la deuxième zone (2b) est associée à un filtre de polarisation orienté horizontalement par rapport à la position d'usage de l'élément (figure 1).

D'une façon avantageuse la première zone associée à un filtre de polarisation orienté verticalement par rapport à la position d'usage de l'élément est adjacente au bord latéral externe de l'élément optique. Dans le cas où l'élément optique est un verre tel que défini précédemment, ladite première zone s'étend sur une largeur allant du bord latérale externe dudit verre jusqu'à une distance comprise entre 5 et 75 mm (préférentiellement entre 5 et 30 mm), mesurée sur une droite allant dudit bord latérale externe vers le centre optique tel que défini précédemment dudit verre.

Dans un deuxième mode de réalisation qui n'est pas dans le cadre de l'invention, l'élément de vision transparent et polarisant peut comprendre plus de deux zones. Il peut comprendre notamment des première et deuxième zones chacune associée à un filtre de polarisation orienté verticalement par rapport à la position d'usage dudit élément et au moins une troisième zone située entre lesdites première et deuxième zones et adaptée pour affecter la lumière traversant ladite troisième zone d'une façon différente desdites première et deuxième zones en fonction de la direction de polarisation de ladite lumière.

Un tel élément de vision transparent et polarisant procure une protection identique contre des éblouissements provoqués par des reflets provenant de chaque côté du champ de vision. La troisième zone de l'élément, située entre les deux zones associées aux filtres orientés verticalement, correspond alors à une partie centrale du champ de vision utilisée en vision droit devant, sans tourner la tête. Cette partie du champ de vision n'est alors pas affectée par les filtres orientés verticalement. Cette troisième zone (2b) de l'élément est alors associée à un filtre de polarisation orienté horizontalement (figure 2). Cette zone centrale permet alors d'atténuer les sources éblouissantes issues de la réflexion de la lumière sur des surfaces horizontales telles que des plans d'eaux et des routes mouillées. Un tel élément de vision est alors particulièrement adapté au confort lors de la conduite.

Lesdites première et deuxième zones (2a) associées à un filtre de polarisation orienté verticalement sont positionnées préférentiellement de façon adjacente à un bord latérale de l'élément ; elles sont séparées par une distance comprise entre 10 et 60 millimètres, préférentiellement par une distance comprise entre 10 et 40 mm, et très préférentiellement par une distance comprise entre 20 et 40 mm, dans une partie centrale dudit élément lorsque ledit élément de vision transparent et polarisant représente un verre tel que défini précédemment.

Selon l'invention (figure 3), l'élément de vision transparent et polarisant comprend :
- une première zone (2a) associée à un filtre de polarisation orienté verticalement par rapport à la position d'usage de l'élément ladite première zone étant située dans une partie latérale de l'élément par rapport à sa position d'usage (ladite première zone étant préférentiellement positionnée de façon adjacente au bord latéral externe dudit élément),
- une deuxième zone (2b) associée à un filtre de polarisation orienté horizontalement;
- et une troisième zone (2c) non polarisée.

Dans le cadre de l'invention, ladite deuxième zone est positionnée dans la partie supérieure de l'élément optique par rapport à la position d'usage dudit élément. De cette façon, ladite troisième zone est positionnée dans la partie inférieure de l'élément optique par rapport à la position d'usage dudit élément.

L'élément de vision transparent et polarisant peut comprendre dans un autre mode de réalisation, une troisième zone (figure 4) située :
- entre les deux première zones (2a) associées à un filtre de polarisation orienté verticalement par rapport à la position d'usage dudit élément, chacune desdites zones étant positionnée de façon adjacente à un bord latéral dudit élément ;
- et en dessous d'une deuxième zone (2b) dans la position d'usage de l'élément, ladite deuxième zone étant associée à un filtre de polarisation orienté horizontalement par rapport à la position d'usage de l'élément ;
- et ladite troisième zone (2c) n'est associée à aucun filtre de - - polarisation. La deuxième zone procure alors une protection contre des éblouissements par des reflets sur des surfaces horizontales.

L'invention concerne aussi une paire de lunettes. L'élément transparent de vision constitue alors un verre de ladite paire de lunettes.

D'autres particularités et avantages de la présente invention apparaîtront dans la description ci-après de plusieurs exemples de réalisation non limitatifs et d'un exemple de dispositif de vision incorporant un mode de réalisation de l'invention, en référence aux dessins annexés, dans lesquels :
- la figure 1 (fig. 1) représente un élément de vision transparent et polarisant comportant une première zone (2a) associée à un filtre de polarisation orienté verticalement par rapport à la position d'usage de l'élément et située de façon adjacente au bord latérale dudit élément de vision ; et une deuxième zone (2b) associée à un filtre de polarisation orienté horizontalement par rapport à la position d'usage de l'élément ;
- la figure 2 (fig. 2) représente un élément de vision transparent et polarisant comportant deux zones latérales (2a) associées à un filtre de polarisation orienté verticalement par rapport à la position d'usage de l'élément; et une troisième zone (2b) associée à un filtre de polarisation orienté horizontalement par rapport à la position d'usage de l'élément ; un tel élément de vision est particulièrement adapté par exemple pour un porteur en situation de conduite d'un véhicule en situation urbaine ;
- la figure 3 (fig. 3) représente un élément de vision transparent et polarisant comportant une première zone (2a) associée à un filtre de polarisation orienté verticalement par rapport à la position d'usage de l'élément et positionnée de façon adjacente au bord latéral externe dudit élément, une deuxième zone (2b) associée à un filtre de polarisation orienté horizontalement et située dans la partie supérieure dudit élément; et une troisième zone non polarisée (2c) et située dans la partie inférieure dudit élément;
- la figure 4 (fig.4) représente une paire de lunettes équipée de verres conformément à un quatrième mode de réalisation de l'invention.

En référence à la figure 4, une paire de lunettes comprend une monture 1 avec deux branches 3, équipée de deux verres 2. Le mot verre est pris dans son sens usuel d'élément optique transparent pour paire de lunettes, sans relation avec la nature du matériau constitutif de celui-ci. Un verre de lunettes tel que considéré dans le cadre de l'invention peut donc être en matériau organique, tel que du polycarbonate, du polyuréthane, ... ou en matériau minéral, par exemple à base de silicate.

Dans le cadre de l'invention, un verre de lunettes peut être seulement un support pour le filtre de polarisation. Dans ce cas les deux faces du verre sont parallèles, de façon à n'introduire aucune distorsion d'image. Ce peut être aussi un verre ayant une activité de correction ophtalmique, quelque soit la nature de la correction (correction de la myopie, de l'astigmatisme, de l'hypermétropie et de la presbytie) et ce peut être un verre afocal, unifocal, bifocal, trifocal ou progressif, notamment. Le verre peut encore être associé à d'autres fonctions optiques, tel qu'un verre de protection solaire ou un verre photochrome....

Dans la figure 4, le verre 2 est divisé en quatre zones distinctes. Deux zones référencées 2a associées à un filtre de polarisation orienté verticalement, sont situées latéralement, c'est-à-dire à proximité des bords gauche et droit du verre 2, respectivement. Chacune des zones 2a présente une limite sensiblement rectiligne et verticale du côté du centre du verre 2. C désigne le centre optique du verre 2. La distance d entre les limites respectives des deux zones 2a situées du côté du centre C, mesurée à la hauteur du centre C, est comprise entre 10 et 60 millimètres. Elle est de préférence inférieure à 40 millimètres. Compte tenu des stratégies oculomotrices des différentes catégories d'individus, les inventeurs ont constaté qu'une distance d comprise entre 20 et 40 millimètres constitue un compromis satisfaisant.

La partie centrale du verre située entre les deux zones 2a peut elle-même être divisée en deux zones 2b et 2c. La zone 2b est associée à un filtre de polarisation orienté horizontalement par rapport à la position d'usage de la paire de lunettes. La zone 2c n'est associée à aucun filtre de polarisation. Ainsi, la réverbération de la lumière, sur une surface réfléchissante horizontale est atténuée ou supprimée lors de son passage au travers de ladite zone 2b. Une telle lumière peut provenir d'un reflet sur la surface du sol située devant le porteur de la paire de lunettes. En particulier, il peut s'agir d'un reflet sur la surface d'une route mouillée située devant un conducteur de véhicule.

Le conducteur de véhicule porteur d'une paire de lunettes équipée de verres conformes à la figure 4 est donc protégé à la fois contre des éblouissements provoqués par des reflets sur des parois verticales situées latéralement dans son champ de vision, et contre des reflets sur la surface d'une route située devant lui. En outre, la partie centrale inférieure de son champ de vision, correspondant à la zone 2c, n'est affectée par aucun filtre de polarisation. Ladite zone 2c permet ainsi de ne pas limiter la visibilité des afficheurs à cristaux liquides qui émettent une lumière polarisée et dont la direction de polarisation dépend de la technologie du système d'affichage et des contraintes et choix de montage du constructeur de véhicules.

La limite entre les zones 2b et 2c peut passer entre le centre C et un point situé à 20 millimètres en dessous du centre C. De préférence, elle est située à 10 millimètres en dessous du centre C. Une telle position de la limite entre les zones 2b et 2c du verre 2 est particulièrement adaptée aux emplacements des divers systèmes de visualisation présents dans un habitacle de véhicule.

De multiples variantes peuvent être introduites par rapport aux modes de réalisation décrits ci-dessus.

Parmi elles, les zones de l'élément de vision transparent et polarisant peuvent être modifiées, par modification de la forme des limites de chaque zone. En particulier, ces limites peuvent être rectilignes ou curvilignes.

Chaque filtre de polarisation peut être réalisé selon l'une des technologies connues de l'Homme du métier, non décrite ici. Ce peut être un filtre par absorption de la lumière polarisée verticalement ou, éventuellement, un filtre par réflexion de la lumière polarisée verticalement.

## Revendications

1. Elément de vision transparent et polarisant divisé en plusieurs zones, deux au moins desdites zones (2a, 2b) étant associées à un filtre de polarisation lumineuse, la lumière traversant l'élément étant affectée différemment pour deux desdites zones en fonction d'une direction de polarisation de ladite lumière, l'élément constituant un verre (2) d'une paire de lunettes et comprenant :
- une première zone (2a) associée à un filtre de polarisation orienté verticalement par rapport à la position d'usage de l'élément, ladite première zone étant située dans une partie latérale de l'élément par rapport à sa position d'usage ; et
- une deuxième zone (2b) associée à un filtre de polarisation orienté horizontalement,
l'élément **caractérisé en ce que** la deuxième zone est positionnée dans la partie supérieure de l'élément par rapport à sa position d'usage ; et
- une troisième zone (2c) non polarisée est positionnée dans la partie inférieure de l'élément par rapport à sa position d'usage.

2. Elément selon la revendication 1, dans lequel la première zone associée au filtre de polarisation orienté verticalement (2a) est adjacente à un bord latéral de l'élément.

3. Elément selon la revendication 2, dans lequel la première zone associée à un filtre de polarisation orienté verticalement (2a) s'étend sur une largeur allant du bord latéral externe dudit élément jusqu'à une distance comprise entre 5 et 75 mm, mesurée sur une droite allant dudit bord latéral externe vers un centre optique dudit élément.

4. Elément selon la revendication 3, dans lequel la première zone associée à un filtre de polarisation orienté verticalement (2a) s'étend jusqu'à une distance comprise entre 5 et 30 mm à partir du bord latéral externe de l'élément.

5. Elément selon la revendication 1 ou 2, **caractérisé en ce qu'**il comprend deux premières zones (2a) chacune associée à un filtre de polarisation orienté verticalement par rapport à la position d'usage de l'élément et chacune positionnée de façon adjacente à un bord latéral dudit élément, et **en ce que** les deuxième (2b) et troisième (2c) zones sont situées entre lesdites deux premières zones, ladite troisième zone (2c) étant positionnée en dessous de ladite deuxième zone (2b) dans la position d'usage de l'élément.

6. Elément selon la revendication 5, dans lequel lesdites deux premières zones (2a) sont séparées par une distance comprise entre 10 et 60 mm dans une partie centrale dudit élément.

7. Elément selon la revendication 6, dans lequel lesdites deux premières zones (2a) sont séparées par une distance comprise entre 10 et 40 mm dans une partie centrale dudit élément.

8. Elément selon la revendication 7, dans lequel lesdites deux premières zones (2a) sont séparées par une distance comprise entre 20 et 40 mm dans une partie centrale dudit élément.

9. Elément selon l'une quelconque des revendications précédentes, dans lequel la limite entre la deuxième zone associée à un filtre de polarisation orienté horizontalement (2b) et la troisième zone associée à aucun filtre de polarisation (2c) passe entre un centre optique dudit élément (C) et un point situé à 20 mm en dessous dudit centre optique.

10. Elément selon la revendication 9, dans lequel la limite entre les deuxième (2b) et troisième (2c) zones passe entre le centre optique (C) et un point situé à 10 mm en dessous dudit centre optique.

11. Paire de lunettes comprenant un élément de vision selon l'une quelconque des revendications précédentes.

## Claims

1. A transparent and polarizing vision element divided into several zones, at least two of said zones (2a, 2b) being associated with a light polarizing filter, the light traversing the element being affected differently for two of said zones according to a direction of polarisation of said light, the element forming a eyeglass (2) of spectacles and comprising:
- a first zone (2a) associated with a polarizing filter oriented vertically with respect to the use position of the element, said first zone being located in a lateral part of the element with respect to its use position;
- a second zone (2b) associated with a polarizing filter oriented horizontally, the element being **characterized in that** the second zone is located in the upper part of the element with respect to its use position; and
- a third zone (2c) not-polarizing is located in the lower part of the element with respect to its use position.

2. The element as claimed in claim 1, in which the first zone associated with the vertically oriented polarization filter (2a) is adjacent to a lateral edge of the element.

3. The element as claimed in claim 2, in which the first zone associated with a vertically oriented polarization filter (2a) extends over a width going from the outer lateral edge of said element to a distance comprise between 5 and 75 mm, measured on a straight line going from said outer lateral edge toward the optical center of said element.

4. The element as claimed in claim 3, in which the first zone associated with a vertically oriented polarization filter (2a) extends to a distance comprised between 5 and 30 mm from the outer lateral edge of the element.

5. The element as claimed in claim 1 or 2, **characterized in that** it comprises two first zones, each associated with a polarisation filter oriented vertically relative to the position of use of the element and each located adjacent to a lateral edge of said element, and **in that** the second (2b) and third (2c) zones are located between said two first zones, said third zone (2c) being located below said second zone (2b) in the use position of the element.

6. The element as claimed in claim 5, in which said two first zones (2a) are separated by a distance comprised between 10 and 60 mm in a central portion of said element.

7. The element as claimed in claim 6, in which said two first zones (2a) are separated by a distance comprised between 10 and 40 mm in a central portion of said element.

8. The element as claimed in claim 7, in which said two first zones (2a) are separated by a distance comprised between 20 and 40 mm in a centrale portion of said element.

9. The element as claimed in any one of the preceding claims, in which the limit between the second zone associated with a horizontally oriented polarization filter (2b) and the third zone not associated with any polarization filter (2c), passes between the optical center (c) of said element and a point situated 20 mm beneath said optical center.

10. The element as claimed in claim 9, in which the limit between the second (2b) and third (2c) zones passes between the optical center (c) and a point situated 10 mm beneath said optical center.

11. Spectacles comprising a vision element according to any one of the preceding claims.

## Patentansprüche

1. In mehrere Gebiete eingeteilte, transparente und polarisierende Seheinrichtung, wobei zumindest zwei der Gebiete (2a, 2b) mit einem Licht-Polarisationsfilter assoziiert sind, wobei das die Einrichtung passierende Licht bei zwei der Gebiete entsprechend einer Polarisationsrichtung des Lichts unterschiedlich beeinflusst wird, wobei die Einrichtung ein Glas (2) einer Brille aufweist und umfasst:
- ein mit einem, im Verhältnis zur Gebrauchslage der Einrichtung, vertikal orientierten Polarisationsfilter assoziiertes erstes Gebiet (2a), wobei sich das erste Gebiet im Verhältnis zu ihrer Gebrauchslage in einem Seitenbereich der Einrichtung befindet; und
- ein mit einem horizontal orientierten Polarisationsfilter assoziierte zweites Gebiet (2b), wobei die Einrichtung **dadurch gekennzeichnet ist, dass** das zweite Gebiet im Verhältnis zu ihrer Gebrauchslage im oberen Bereich der Einrichtung gelegen ist, und
- ein nicht polarisiertes drittes Gebiet (2c) im Verhältnis zu ihrer Gebrauchslage im unteren Bereich der Einrichtung gelegen ist.

2. Einrichtung gemäß Anspruch 1, bei der das mit dem vertikal orientierten Polarisationsfilter assoziierte erste Gebiet (2a) angrenzend zu einem Seitenrand der Einrichtung befindlich ist.

3. Einrichtung gemäß Anspruch 2, bei der sich das mit einem vertikal orientierten Polarisationsfilter assozierte erste Gebiet (2a) von einem äußeren Seitenrand der Einrichtung aus bis zu einem Abstand zwischen 5 und 75mm erstreckt, gemessen auf einer Geraden vom äußeren Seitenrand in Richtung einer optischen Mitte der Einrichtung.

4. Einrichtung gemäß Anspruch 3, bei der sich das mit einem vertikal orientierten Polarisationsfilter assoziierte erste Gebiet (2a) bis zu einem Abstand zwischen 5 und 30mm vom äußeren Seitenrand der Einrichtung aus erstreckt.

5. Einrichtung gemäß Anspruch 1 oder 2, **dadurch gekennzeichnet, dass** sie zwei erste Gebiete (2a) aufweist, wobei jedes mit einem im Verhältnis zur Gebrauchslage des Elements vertikal orientierten Polarisationsfilter assoziiert ist, und jedes angrenzend zu einem Seitenrand der Einrichtung gelegen ist, und **dadurch**, dass sich die zweiten (2b) und dritten (2c) Gebiete zwischen den zwei ersten Gebieten befinden, wobei sich das dritte Gebiet (2c) in der Gebrauchslage der Einrichtung unterhalb dem zweiten Gebiet (2b) befindet.

6. Einrichtung gemäß Anspruch 5, bei der die zwei ersten Gebiete (2a) in einem Mittenbereich der Einrichtung um einen Abstand zwischen 10 und 60mm getrennt sind.

7. Einrichtung gemäß Anspruch 6, bei der die zwei ersten Gebiete (2a) in einem Mittenbereich der Einrichtung um einen Abstand zwischen 10 und 40mm getrennt sind.

8. Einrichtung gemäß Anspruch 7, bei der die zwei ersten Gebiete (2a) in einem Mittenbereich der Einrichtung um einen Abstand zwischen 20 und 40mm getrennt sind.

9. Einrichtung gemäß einem der vorangegangenen Ansprüche, bei der die Grenze zwischen dem mit einem horizontal orientierten Polarisationsfilter assoziierten zweiten Gebiet (2b) und dem mit keinem Polarisationsfilter assoziierten dritten Gebiet (2c) zwischen einer optischen Mitte der Einrichtung (C) und einem 20mm unterhalb der optischen Mitte befindlichen Punkt verläuft.

10. Einrichtung gemäß Anspruch 9, bei der die Grenze zwischen den zweiten (2b) und den dritten (2c) Gebieten zwischen der optischen Mitte (C) und einem 10mm unterhalb der optischen Mitte befindlichen Punkt verläuft

11. Brille, die eine Seheinrichtung gemäß einem der vorangegangenen Ansprüche aufweist.
